# EUROPEAN PATENT APPLICATION

(11) **EP 4 654 753 A1**
(43) Date of publication of application: **26.11.2025**
(21) Application number: 24177577.4
(22) Date of filing: 23.05.2024
(51) Int. Cl.: H05B 47/125, G06F 3/01, G06V 40/20, G06F 3/03

(54) **CAMERA-CONTROLLED LIGHTING SYSTEM AND METHOD FOR OPERATING THE CAMERA-CONTROLLED LIGHTING SYSTEM**

(71) Applicant: Zumtobel Lighting GmbH, 6850 Dornbirn (AT)
(72) Inventor: Böhnel, Dr. Michael, 6851 Dornbirn (AT)
(74) Representative: Beder, Jens

(57) **Abstract**

The invention is related to a camera-controlled lighting system comprising a lighting system (2) capable of adjusting at least one lighting parameter in a selected area within a total illumination area of the lighting system. The selected area is illuminated differently from the at least one lighting parameter outside the selected area. A camera (3) having a field of view overlapping with the total illumination area captures images based on which the selected area is determined A processing unit (4) is capable of detecting objects in the image captured by the camera (3) and is configured to control the lighting system (2) based on detected objects including a hand making a gesture, wherein the processing unit (4) is further configured to calculate a pointing vector (16) upon detection of a defined hand and finger gesture and an intersection of the pointing vector with an object (11) to determine the selected area

## Description

The invention regards a camera controlled lighting system and a method for controlling the camera-controlled lighting system.

Modern lighting systems provide a variety of functions that allow to adjust light emission and illumination of an area in the periphery of the lighting system. In addition to basic functionalities like dimming, which was available already for conventional lighting systems, LED based lighting systems offer even more sophisticated functions. Matrix light sources, for example, enable to tailor the illuminated area according to needs, as it is well known from modern vehicles.

WO 2014/060874 describes using gestures for controlling basic functions of a lighting system. However, the described system does not select areas within an entire area that can be illuminated by a lighting system. The gestures are only used to control an overall illumination of a scene. However, modern lighting systems allow to selectively adjust lighting parameters like brightness or color for certain areas inside an entire area that can be illuminated.

On the other hand, object recognition made huge progress recently, so that there are systems available that can identify objects in captured images automatically. However, when such automated identification of objects shall be used to control a lighting system, the system needs to be programmed advance to apply a certain rule for adapting a lighting parameter to the lighting system in order to achieve the desired illumination effect for the identified object. There is no flexibility in identifying various objects and/or select only one out of a plurality of identical objects.

Thus, there is a need to improve control of lighting systems that are generally able to selectively adjust illumination for different areas in an entire illumination area.

This goal is achieve with the present invention as defined in the independent claims. The respective subclaims relate to advantageous features and aspect.

A camera-controlled lighting system according to one aspect of the present invention comprises a lighting system (2) capable of adjusting at least one lighting parameter in a selected area within a total illumination area of the lighting system differently from the at least one lighting parameter outside the selected area. The system further comprises a camera (3) having a field of view overlapping with the total illumination area, and a processing unit (4) capable of detecting objects in an image captured by the camera (3) and configured to control the lighting system (2). Controlling the lighting system is based on detected objects including a hand making a gesture.

An image is captured by the camera and the captured image is processed by a processing unit of the camera controlled lighting system. The processing unit is configured to identify objects in the image including a hand and finger gesture. The processing unit is further configured to calculate a pointing vector upon detection of a defined hand and finger gesture and an intersection of the pointing vector with an object to determine the selected area.

With the present invention it is possible that an operator of the camera controlled lighting system is present in the scene and directly controls the selection of an area within the entire illumination area to be selected for an adjusted illumination in that selected area. Operators can make a hand and finger gesture which is compared with prestored hand and finger gestures. The hand and finger gestures are a combination of a pointing component and an instruction component identifying the lighting parameters to be adapted and the way these parameters are adapted. The adaptation and the lighting parameters to be adapted can be predefined for a plurality of different gestures. For example, the victory sign can be used for highlighting a selected area and a high five gesture could be associated with the selection of a certain light color. The pointing component in the hand and finger gesture on the other side defines the area to be selected, to which the identified adaption of the light is applicable.

The present invention allows an easy control of lighting effects by simultaneously identify an applicable effect and the selected area to which this effect shall be applied. There is no need for an a priori programming of applicable rules and an association of effects with determined object types.

Preferably, the camera (3) is a 3D-camera. Providing a 3D-camera allows a much easier determination of the selected area. The calculation of the intersection between the pointing vector and an object becomes much easier and more accurate compared to using only two-dimensional information.

Advantageously, the processing unit is configured to calculate the pointing vector to include the wrist and an index finger tip. This approach allows to determine, based on an identified hand posture, the pointing vector in an easy way. Using the pointing vector including the wrist and the index finger tip directly responds to the natural behavior of an operator who wants to point at something. A further alternative uses the index finger tip and the index finger's knuckle It is further preferred to ignore objects occluded by the hand gesture for the intersection calculation. This is particularly advantageous for 2D-systems in which it might be more difficult to determine the pointed object correctly. The dismissal of objects that are positioned behind the hand performing the gesture reduces the objects that are required to be considered in the determination of the intersection. The error rate can thus be reduced.

The processing unit may be configured to determine an angle of the pointing vector with respect to a camera orientation based on a contraction of a finger length in the captured image. When the index finger, for example, is directed towards or away from the camera lens, the length if the index finger is reduced in a two dimensional representation, which the image captured by the camera in a 2D- system is. Taking into consideration such contraction of finger length in the image reduces the possible orientations of the finger, which, in turn, improves the reliability of the determined pointing vector.

Additionally or alternatively, depth information may be estimated based on a size of the hand in the image and/or based on information on object size of a determined object. The camera system usually has a fixed focal length. With knowledge on the size of the hand performing the hand and finger gesture, it is therefore possible to roughly estimate the distance in which the hand was from the camera, when the image was taken. It is even sufficient to consider an average hand size for the rough estimation of the distance. Apart from the estimation of the distance of a hand from the camera, it is also possible to take into account the size of an object in the captured image. For example, a table surrounded by a plurality of chairs will typically have a height of 76cm. When such a dimension is known for an object, the distance from the camera can be estimated as well. Further, in case that the distances can be estimated for a plurality of different objects, this depth information can be collected for the captured image.

Preferably, the optical axes of the lighting system (2) and the camera( 3) are aligned. Having the two axes aligned improves the accuracy of the system.

According to another aspect of the present invention, a method for operating a camera-controlled lighting system for illuminating a selected area is provide. The camera-controlled lighting system includes a lighting system capable of adjusting at least one lighting parameter in a selected area within a total illumination area of the lighting system differently from the at least one lighting parameter outside the selected area. The system for executing the method comprises a camera having a field of view overlapping with the total illumination area, and a processing unit. The method comprises the steps of capturing an image (S1) by the camera (3) and identifying at least two objects (11) (S8) in the captured image including a target object and a hand making a hand and finger gesture, and calculating a pointing vector upon detection of a defined hand and finger gesture and an intersection of the pointing vector with an object to determine the selected area. The processing unit controls the lighting system to illuminate the selected area differently to the illumination of the area outside the selected area.

Preferably, the camera controlled lighting system is calibrated. Calibrating the camera controlled lighting system means that the system stores a transformation scheme enabling transformation between the coordinate system of the camera and the coordinate system of the lighting device. When a determination is made for a selected area based on a captured image, the information is initially made in the camera coordinate system. In the calibrated camera controlled lighting system, the coordinates of a selected area can then be transformed into coordinates in the lighting system coordinate system. This allows to directly control the light emission to be made in the correct area, which is the selected area.

The processing unit is configured to be able to identify gestures in a captured image. The processing unit compares postures of a hand with stored reference postures for example in order to find a similarity between an observed posture of a hand and finger and a reference posture. Reference postures are stored for each gesture together with the corresponding action or command. Apart form the actions concerning lighting control by adjusting parameters of the emitted light, it is preferably also possible to store gestures (or the respective reference posture) associated with other functions. Preferably, the calibration is triggered by such a gesture perceived by the camera. This allows an easy initiation of the calibration routine.

The quality of the calibration may be increased when the calibration is based on a plurality of presented patterns.

Illuminating the selected area differently includes at least one of:
- selectively changing a brightness or color of light illuminating the selected area (11) relative to light illuminating the area outside the selected area (S11), and
- generating a light pattern for illuminating the selected area or the area outside the selected area (S11).

According to a preferred aspect of the present invention, at least one lighting parameter is fixedly maintained for a minimum period of time. This has the advantage, that an overly fast change in the illumination of a certain area in avoided. Such a quick change in the illumination would for example be caused, when a unit of the initially photographed scene disappears in a next captured image.

The invention will now be explained with reference to the attached drawings in which
- Fig. 1: shows a block diagram of a system according to an embodiment of the pre-sent invention when an operator controls the system,
- Fig. 2: illustrates a model of hands used to calculate a pointing vector identify a hand and finger gesture, and
- Fig. 3: is a simplified flowchart illustrating a calibration phase and a regular operation phase according to the present invention

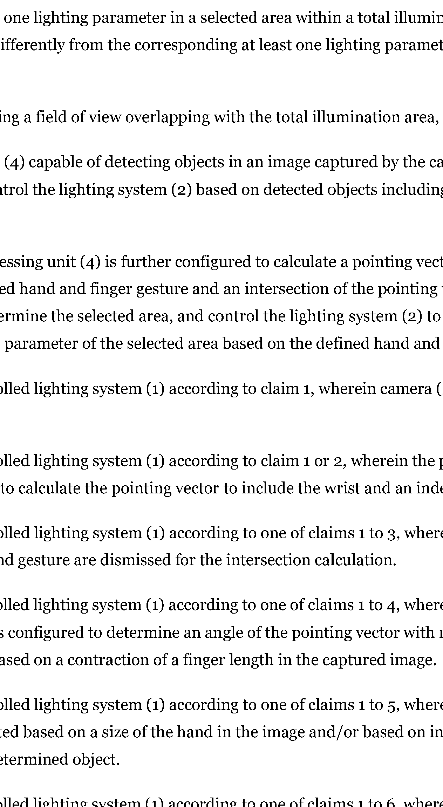

In figure 1, a camera controlled lighting system 1 according to the present invention is shown with its main components in a situation in which an area to be illuminated in specifically adjusted lighting parameters is selected by an operator. The camera controlled lighting system 1 shown in figure 1 is an integrated system, in which a lighting system 2, a camera 3 and a processing unit 4 together form an intelligent digital luminaire. The lighting system 2 mainly comprises a digital light source, preferably a spotlight.

The lighting system 2 comprises a controllable digital light source, which may have a resolution of at least 32 segments. The light source may have a two-dimensional rectangular arrangement of the segments with preferably 32 × 32 segments. Alternatively, light sources with fixed segments that can be illuminated but which are not rectangular could be used as well. A light source could be an LED matrix, digital lighting projector or similar light sources that allows to selectively illuminate segments which commonly form the total illumination area of the light source. The lighting system 2 is configured to receive a control signal defining the light to be emitted, in particular the area to be illuminated. The control signal includes information on the area to be illuminated, which is a selected area, and preferably at least one lighting parameter such as brightness or color for each of the selected area. The process of selecting the selected area is described below in greater detail.

Preferably, the camera controlled lighting system is calibrated. For calibrating the system, the processing unit 4 determines, based on information received from the camera 3, a transformation scheme to transform a camera coordinate system into a coordinate system of the lighting system 2. Processing the information received from the camera 3 is done by a processor 5 in the processing unit 4, which is connected to a memory 6. The determined transformation scheme is stored in the memory 6 so that it is available at a later point in time during regular operation of the camera controlled lighting system 1.

In addition to determining the transformation scheme by the processing unit 4, the processing unit 4 is configured to generate an output control signal for the lighting system 2. The processing unit 4 comprises an output interface 7 for outputting the control signal to the lighting system 2, which, accordingly, comprises an input interface 9.

The camera 3 provides an image to an input interface 8 of the processing unit 4, which is connected to an image output interface 10 of the camera 3. The camera 3 captures an image corresponding to a field of view 13 of the camera 3. The field of view 13 of the camera 3 overlaps with a total illuminated area, indicated by 12 in the drawing. Thus, light, which is emitted by the lighting system 2 illuminating an area in the environment of the camera controlled lighting system illuminates an area in the environment of the camera controlled lighting system an image of which is captured by the camera 3. Preferably, the field-of-view of the camera 3 is chosen such that the total illumination area can be captured by the camera 3.

Figure 1 shows a situation in which a first object 11 and a second object 13 are present in the total illumination area 12 that can be illuminated by the lighting system 2 and which is also within the field of view 13 of the camera 3. The processing unit 4 is also able to identify gestures made by a human (operator) 14. The gestures are used for controlling the camera controlled lighting system 1. In particular, the gesture recognition is used to select the selected area that is the target for illumination characteristics defined in the gesture. Gesture detection itself is known in the art and may be applied to an image or a sequence of images captured by the camera 3. In case that an operator 14 performs a gesture within the field of view 13 of the camera 3, an mage captured by the camera 3 (still image or moving image) is provided to the processing unit 4. The processing unit 4 identifies a gesture and controls the lighting system 2 accordingly or starts the calibration process as it will be explained later on in greater detail. Gestures that are applicable in the camera controlled lighting system are predefined and stored in the memory. 6.

Generally, the calibration process starts with presenting a predefined pattern by the lighting system 2. The lighting system 2 is controlled accordingly by the processing unit 4 to emit light corresponding to the predefined pattern. Information on the predefined pattern can be stored in the memory 6 and the respective control signal is generated by the processor 5 based on the information stored in the memory 6. A preferred example for such a predefined pattern is a chessboard, but other preferably regular patterns can be used as well. Using a pattern with rectangular segments is specifically advantageous when the light source has in a two-dimensional rectangular arrangement.

When the illumination area in the environment is illuminated by lighting system 2, the camera 3 captures an image representing the light pattern illuminating the environment of the camera controlled lighting system 1. Since the light pattern is predefined, coordinates of features of the pattern are known in the coordinate system of the lighting system 2. Thus, these features, for example edges or corners in the defined pattern, can be identified in the image taken by the camera 3. The processing unit 4, controlling the lighting system 2 to emit light according to the predefined pattern, therefore has knowledge about the coordinates of a feature in the coordinate system of the lighting system 2 and also in the coordinate system of the camera 3. These coordinates of the same feature in the coordinate system of the lighting system 2 and the coordinate system of the camera 3 are then processed in order to determine a transformation scheme. The determination is performed by the processor 5. The resulting transformation scheme is stored in the memory 6 and is, during regular operation, retrieved from the memory 6 for controlling the lighting system 2 with respect to a selected area corresponding to coordinates identified in an image captured by the camera 3. The selected area is determined based on a camera image including determined objects. One of these objects is a hand of an operator 14 making a gesture. In response to recognizing the gesture, the processing unit determines the selected area and controls the lighting system 2 accordingly.

A preferred transformation is perspective transformation including at least four coordinate pairs. However, other transformations may be used as well. It is to be noted, that such transformation between different coordinate systems are known in the art and existing software modules can be used in order to determine the transformation scheme once the image with the predefined pattern of light emitted by the lighting system 2 is received by the processing unit 4.

According to a preferred embodiment, a plurality of images captured by the camera 3 can be used for calibrating the camera controlled lighting system 1. The plurality of images may be captured for a corresponding plurality of patterns, for example, a 7×8 chessboard and a 4×5 chessboard. Using a plurality of different patterns in captured images allows to identify additional coordinate pairs, which helps to overcome the problems of having bad reference coordinates. This may be the case, when foreground objects occlude image plane or corners have bad reflection properties. Further, capturing a plurality of images for a single pattern allows to average and avoids errors due to moving objects in the calibration area. Both aspects may be combined and serve an improvement of accuracy.

For example, the camera 3 captures an image including the first object 11 as illustrated in figure 1. Coordinates of the object 11 in the captured image are transformed using the stored transformation scheme into the coordinate system of the lighting system 2. According to the transformed coordinates, the lighting system 2 can then be controlled with respect to a selected are of the first object 11 for example. A selected area could be a surface of the first object, for example a table top. The first object 11 is identified in the captured image and one of its surfaces identified from the gesture of the operator 4 shall be highlighted in the environment. Thus, the processing unit 4 generates a control signal causing the lighting system 2 to emit light only in the segments corresponding to the selected surface of the detected object 11.

It is to be noted, that highlighting the selected surface of the detected object 11 is only one example for adapting a lighting parameter. Other examples may regard other lighting parameters and may include changing the light color or highlighting an area outside the selected area instead of the selected area itself.

Detection of objects 11, 13 in the environment of the camera controlled lighting system 1 and also gestures made by the operator 4 is based on commonly known detection algorithms including AI, deep learning neural networks or the like.

The adaptation of at least one lighting parameter with respect to a selected area in the captured image is predefined, which means that memory 6 holds a table associating an identified gesture with a specific adaptation of a lighting parameter to be performed. For example, the processing unit 4 may search the captured image for all known gestures, identifies one of the gestures and applies an operation associated with this gesture to the area selected in the gesture. It is to be noted that all gestures used in the present invention include an operation controlling component determining the specific adjustment of the lighting parameters and a selection component, which is used to identify an object and select a surface thereof as selected surface.

The camera controlled lighting system 1 can also be configured to regularly capture new images by the camera 3. In that case, the illumination of the selected surface is updated accordingly with each new captured image and movements of the identified objects with its surface will be reflected in the adaptation of the lighting parameters. In case that an identified object is moved and the adaptation requires highlighting a surface thereof by increasing the brightness for the selected area, the highlighted area will then follow the movement of the identified object.

On the other hand, it might be desired that a certain adaptation of a light parameter is maintained at least for a minimum time interval. In such a case, even if the object is removed before the new image is captured by the camera 3, the selected area originally defined on the identified object 11, 13 will still be highlighted (or to be more general the respective adaptation of the light parameters with respect to the initially identified object 11 is maintained).

As mentioned above, the illustrated camera controlled lighting system 1 is an integrated system. However, the lighting system 2 and the camera 3 can also be arranged in a distributed manner. In such a case, the camera 3 and the lighting system 2 are communicatively connected to the processing unit 4 using wired or wireless communication. According to preferred embodiment, the processing unit 4 is integrated in the lighting system 2. The generation of a control signal for the lighting system 2 is required in any case for intelligent digital luminaires that enable selectively defining lighting parameters for individual segments. Thus, including the functionality of calibrating a system based on a captured image from a camera 3 requires only moderate effort of adaptation of the processing unit 4 included in the lighting system 2. Such a lighting system 2 is then connected by wires or wirelessly to a camera 3 providing captured images. Preferably, the processing unit 4 is further configured to send control signals to the camera 3 allowing to trigger capturing new images by the camera 3.

As briefly explained above, the gesture that is identified based on the captured image of the camera 3 includes a component identifying the operation to be made but also a component for selecting a selected area to which the desired operation shall be applied. This is schematically illustrated in figure 1. The operator 14 makes a gesture including the pointing component of the gesture as indicated by reference numeral 15. Such a pointing component could be the index finger included in the gesture, which is regularly used by an operator 14 to point towards an object of interest. According to the present invention, this pointing component forms the basis for identifying a selected area.

From the pointing component of the gesture, a pointing vector is calculated. This can be done by identifying the direction of the index finger in the image as a pointing vector. The pointing vector is then extended in order to determine an intersection between the pointing vector and an object identified in the captured image. The intersection of the pointing vector (or its projection on the object surface) and the object identifies an object in the first step. The selected area determined based on the identified object can be defined to include the entire surface of the identified object, but also only parts thereof, for example edges, or a single surface of a plurality of surfaces of the identified object..

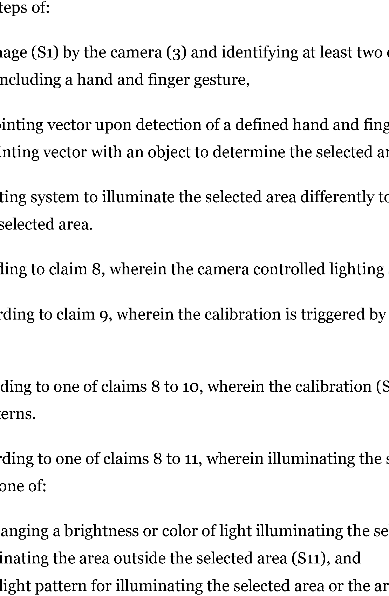

Figure 2 shows two examples for gestures that could be used to define an operation. Both examples include the index finger and the index finger's posture and orientation in the captured image is used to calculate the pointing vector in the image where one of the possible gestures has been identified. The principle of identifying hand gestures as indicated in figure 2 is known in the art. For evaluating the pointing component of the gesture, the pointing vector is calculated starting for example from the wrist of the hand indicated by W (R or L indicates the left or right hand) in the drawing and including the fingertip F of the index finger. Alternatively, the pointing factor could be based on the knuckle K and the fingertip F of the index finger.

Figure 2 already shows that the right or the left hand but also a combination thereof can be used for identifying a certain gesture. It is particularly possible to associate different operations with the same gesture made either by the right-hand or the left-hand. The gestures are used for the present invention comprise a plurality of fingers indicating the operation to be made (definition of the desired illumination characteristics) and including a pointing component, preferably the index finger, for allowing to determine the pointing vector. Typical gestures are the victory-sign, hi-five and Spiderman-sign.

In order to facilitate determination of the intersection with an object (surface)identified in the captured image, it is possible to dismiss certain objects in the captured image. For example, if an object is occluded by the hand making the gesture, this will be ignored in the determination of an intersection of the pointing vector and determined objects. Further, the determining the pointing vector supported by considering a contraction of the index finger. This helps to identify the direction to which the operator 14 points. The contraction of the finger length allows to assist identification of an angle towards or away from the camera capturing the image. Thus, the identification of objects to which the operator points is improved, because certain objects requiring a different angle of the index finger can be ignored. Additionally or alternatively, depth information obtained by estimating distances of the objects can be used to improve calculation of the intersection. In case that a 3D-system is used, the depth information can be obtained from the stereo image captured be a 3D-camera 3.

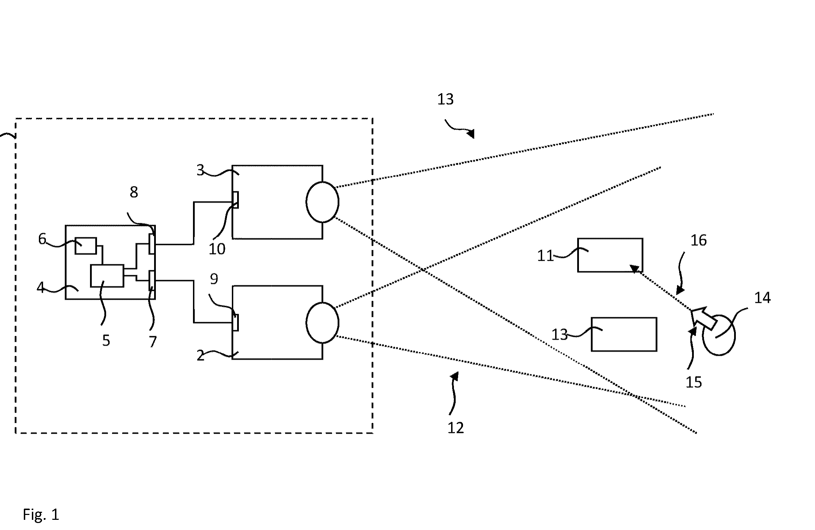

Figure 3 summarizes the procedure of selecting, from a recognized gesture in a captured image, an area to which an operation (specific illumination) defined in the same gesture shall applied, and also calibrating the camera controlled lighting system 1 in case that a respective trigger gesture initiating the calibration routine is recognized..

In step S1, the system starts with obtaining a camera image. The image is then analyzed in step S2, specifically in order to determine whether the captured image (or sequence of images) includes objects 11, 13 and 14. It is to be noted that a hand making a gesture is also identified as one of the objects in the image. A gesture made by an operator 14 of the system is analyzed in step S3 in which it is distinguished between a calibration gesture and a selection gesture (including operation definition information for the selected area). If a calibration gesture is identified, the lighting system 2 is controlled to emit light of a predefined pattern to start the calibration routine. This predefined pattern is presented in step S4.

The pattern presented by the lighting system 2 is then detected by the camera 3 by capturing an image which at least partially overlaps with the illumination area to which the predefined pattern is presented by the lighting system 2.

As explained above in greater detail, the corresponding coordinates in the coordinate system of the lighting system 2 and the camera coordinate system of the camera 3 are evaluated in order to determine a transformation scheme. The determination of the transformation scheme in step S6 is performed by the processor 5 in the processing unit 4. The determined transformation scheme is then stored in the memory 6 in step S6.

In case that no calibration gesture is determined in step S3, but a selection gesture is identified, the system will operate in its regular operation mode. In such a case, based on the image captured and analyzed in step S2 a pointing vector is calculated in step S8.

Based on the pointing vector, an intersection of the pointing vector with one of the identified objects 11, 13 in the captured image is calculated in step S9. As explained above, objects in the image may be ignored when calculating an intersection between the pointing vector and an object based on occlusion of the object by the hand making the gesture. Further, when identifying objects that should be considered for the calculation of the intersection, a contraction of the finger length based on which the pointing vectors calculated may be taken into consideration.

After the intersection between the pointing vector and an object 11, 13 (or a surface of the object) has been calculated, the selected area is determined. It is to be noted, that the selected area may be a single surface of a plurality of surfaces of an object, which intersects with the pointing vector, but it could also be that the selected area corresponds to the entire surface of the object which intersects with the pointing vector. In order to distinguish whether it is a specific surface from a plurality of surfaces of an object or the entire surface, it is for example possible to use a right hand gesture and a left hand gesture. The victory sign of the right-hand could therefore be used to control illumination of the entire surface of an object that is identified by the intersection of the pointing vector with the object surface, while the victory sign of the left-hand could be used to control illumination only of a single surface as the selected area, preferably the surface including the intersection point.

The applicable adaptation of the lighting parameters is selected in step S 11 based on the operation component of the identified gesture. The coordinates of the position of the selected area in the captured image is transformed into the coordinate system of the lighting system 2. Based on the transformed coordinates of the detected object and the applicable adaptation of lighting parameters, a control signal for controlling light emission of the lighting system 2 is generated. The memory 6 may hold a plurality of different gestures that can be used by the operator 14, each associated with a respective definition for the adjustment of the desired lighting parameter in the selected area. In step S 12 the generated control signal is provided to the lighting system 2 and the lighting system 2 is caused to emit light with the desired characteristics with respect to the selected area.

## Claims

1. Camera-controlled lighting system comprising a lighting system (2) capable of adjusting at least one lighting parameter in a selected area within a total illumination area of the lighting system differently from the at least one lighting parameter outside the selected area, a camera (3) having a field of view overlapping with the total illumination area, and a processing unit (4) capable of detecting objects in an image captured by the camera (3) and configured to control the lighting system (2) based on detected objects including a hand making a gesture, wherein the processing unit (4) is further configured to calculate a pointing vector (16) upon detection of a defined hand and finger gesture and an intersection of the pointing vector with an object (11) to determine the selected area.

2. Camera-controlled lighting system according to claim 1, wherein camera (3) is a 3D-camera.

3. Camera-controlled lighting system according to claim 1 or 2, wherein the proceesing unit (4) is configured to calculate the pointing vector to include the wrist and an index finger tip.

4. Camera-controlled lighting system according to one of claims 1 to 3, wherein objects occluded by the hand gesture are dismissed for the intersection calculation.

5. Camera-controlled lighting system according to one of claims 1 to 4, wherein the processing unit (4) is configured to determine an angle of the pointing vector with respect to a camera orientation based on a contraction of a finger length in the captured image.

6. Camera-controlled lighting system according to one of claims 1 to 5, wherein depth information is estimated based on a size of the hand in the image and/or based on information on object size of a determined object.

7. Camera-controlled lighting system according to one of claims 1 to 6, wherein the optical axes of the lighting system (2) and the camera( 3) are aligned.

8. A method for operating a camera-controlled lighting system (1) for illuminating an indoor area, the camera-controlled lighting system having:
- a lighting system (2) capable of adjusting at least one lighting parameter in a selected area within a total illumination area of the lighting system differently from the at least one lighting parameter outside the selected area,
- a camera (3) having a field of view overlapping with the total illumination area, and
- a processing unit (4),
comprising the steps of:
- capturing an image (S1) by the camera (3) and identifying at least two objects (11) (S8) in the captured image including a hand and finger gesture,
- calculating a pointing vector upon detection of a defined hand and finger gesture and an intersection of the pointing vector with an object to determine the selected area, and
- control the lighting system to illuminate the selected area differently to the illumination of the area outside the selected area.

9. Method according to claim 8, wherein the camera controlled lighting system is calibrated.

10. Method according to claim 9, wherein the calibration is triggered by a gesture perceived by the camera (3).

11. Method according to one of claims 8 to 10, wherein the calibration (S) is based on a plurality of presented patterns.

12. Method according to one of claims 8 to 11, wherein illuminating the selected area differently includes at least one of:
- selectively changing a brightness or color of light illuminating the selected area (11) relative to light illuminating the area outside the selected area (S11), and
- generating a light pattern for illuminating the selected area or the area outside the selected area (S11).

13. Method according to one of claims 8 to 12, wherein the at least one lighting parameter is fixedly maintained for a minimum period of time.

## Amended claims

### Amended claims in accordance with Rule 137(2) EPC.

1. Camera-controlled lighting system (1) comprising:
a lighting system (2), which is part of the camera-controlled lighting system (1) and capable of adjusting at least one lighting parameter in a selected area within a total illumination area of the lighting system differently from the corresponding at least one lighting parameter outside the selected area,
a camera (3) having a field of view overlapping with the total illumination area, and
a processing unit (4) capable of detecting objects in an image captured by the camera (3) and configured to control the lighting system (2) based on detected objects including a hand making a gesture,
wherein the processing unit (4) is further configured to calculate a pointing vector (16) upon detection of a defined hand and finger gesture and an intersection of the pointing vector with an object (11) to determine the selected area, and control the lighting system (2) to adjust the at least one lighting parameter of the selected area based on the defined hand and finger gesture.

2. Camera-controlled lighting system (1) according to claim 1, wherein camera (3) is a 3D-camera.

3. Camera-controlled lighting system (1) according to claim 1 or 2, wherein the proceesing unit (4) is configured to calculate the pointing vector to include the wrist and an index finger tip.

4. Camera-controlled lighting system (1) according to one of claims 1 to 3, wherein objects occluded by the hand gesture are dismissed for the intersection calculation.

5. Camera-controlled lighting system (1) according to one of claims 1 to 4, wherein the processing unit (4) is configured to determine an angle of the pointing vector with respect to a camera orientation based on a contraction of a finger length in the captured image.

6. Camera-controlled lighting system (1) according to one of claims 1 to 5, wherein depth information is estimated based on a size of the hand in the image and/or based on information on object size of a determined object.

7. Camera-controlled lighting system (1) according to one of claims 1 to 6, wherein the optical axes of the lighting system (2) and the camera( 3) are aligned.

8. A method for operating a camera-controlled lighting system (1) for illuminating an indoor area, the camera-controlled lighting system (1) having:
- a lighting system (2) capable of adjusting at least one lighting parameter in a selected area within a total illumination area of the lighting system differently from the at least one lighting parameter outside the selected area,
- a camera (3) having a field of view overlapping with the total illumination area, and
- a processing unit (4),
comprising the steps of:
- capturing an image (S1) by the camera (3) and identifying at least two objects (11) (S8) in the captured image including a hand and finger gesture,
- calculating a pointing vector upon detection of a defined hand and finger gesture and an intersection of the pointing vector with an object to determine the selected area, and
- control the lighting system to illuminate the selected area differently to the illumination of the area outside the selected area.

9. Method according to claim 8, wherein the camera controlled lighting system is calibrated.

10. Method according to claim 9, wherein the calibration is triggered by a gesture perceived by the camera (3).

11. Method according to one of claims 8 to 10, wherein the calibration (S) is based on a plurality of presented patterns.

12. Method according to one of claims 8 to 11, wherein illuminating the selected area differently includes at least one of:
- selectively changing a brightness or color of light illuminating the selected area (11) relative to light illuminating the area outside the selected area (S11), and
- generating a light pattern for illuminating the selected area or the area outside the selected area (S11).

13. Method according to one of claims 8 to 12, wherein the at least one lighting parameter is fixedly maintained for a minimum period of time.
